# EUROPEAN PATENT APPLICATION

(11) **EP 1 908 571 A2**
(43) Date of publication of application: **09.04.2008**
(21) Application number: 07117599.6
(22) Date of filing: 01.10.2007
(51) Int. Cl.: B29C 49/54, B29C 49/04

(54) **Process for forming coupling means on plastic containers obtained by extrusion and blow moulding, and the mould used**

(30) Priority: 03.10.2006 IT MI20061894
(71) Applicant: Chiari, Gino, 42043 Gattatico (RE) (IT); Chiari, Edo, 42043 Gattatico (RE) (IT)
(72) Inventor: Chiari, Gino, 42043 Gattatico (RE) (IT); Chiari, Edo, 42043 Gattatico (RE) (IT)
(74) Representative: Ripamonti, Enrico

(57) **Abstract**

The process and relative mould enable coupling means (16) to be formed on the walls of plastic containers (10; 10A; 10B; 10C) obtained using an extrusion and blow moulding process.

The mould (14), used during the blow moulding step, presents internally, in each position corresponding to that in which said coupling means (16) are to be provided, a peg (18) with an enlarged head (20), extending perpendicularly to the internal wall of the mould (14), to enable a dead hole (22) with an undercut (23), of shape matching that of said peg (18), to be obtained in the container (10; 10A; 10B; 10C).

## Description

The present invention relates to a process for forming coupling means on the walls of plastic containers obtained by an extrusion and blow moulding process, said coupling means serving to apply various articles to the container, such as a handle or handgrip, or to apply accessories thereto, or to fix a relative lid onto said containers.

The invention also relates to a blow mould for implementing the process of the invention.

As known to the expert of the art, plastic buckets used to be traditionally produced by injection moulding a suitable plastic material. These buckets used to be normally provided with a classical rotatable metal handle of semicircular shape, which when not in use lies flat by gravity against the side wall of the bucket. Until a few years ago, these buckets were made comprising, in diametrically opposite positions on their upper edge, radial vertical lugs provided with through holes with their axis tangential. The appropriately hook-shaped corresponding end of the metal handle was inserted into the relative hole so that the handle could rotate about a diametrical horizontal axis lying in the plane of the lugs. In a variant, respective upwardly projecting vertical lugs were provided diametrically opposite on the upper edge of the bucket, each being provided with a hole of radial axis into which the suitably hook-shaped corresponding end of the metal handle was inserted.

However these two solutions presented the drawback that the ends of the metal handle had to be machined to give them said hook shape.

More recently, it has been thought to simplify the connection of the handle to the bucket by providing, instead of said lugs, an external boss having a central circular dead hole of radial axis, internally provided with an undercut, the relative end of the profiled handle being forced into the hole (by virtue of a certain elasticity of the plastic material used to make the bucket), this end being in the form of a peg with an enlarged head so that its shape mates with the shape of said blind hole, allowing said end to be snap-inserted into the hole by forcing. In this case the handle is normally of plastic.

As in this case the bucket and relative handle are preferably produced by injection moulding, the construction of the moulds for obtaining the two relative dead holes with an undercut presents no problems.

For many years it has been known to produce plastic bottles using an extrusion and blow moulding process. This process is implemented by machines which achieve higher production rates and lower costs than those machines which implement the injection moulding process. The extrusion and blow moulding process has traditionally been used for obtaining "closed" containers (e.g. the bottles for water, these being thus considered closed containers).

Italian patent application M 12006A000266, filed by the same proprietors as the present application, describes a process of this type enabling open plastic containers, such as buckets, to be obtained at decidedly lower costs than the costs involved in producing the same buckets by injection moulding.

Specifically, this process comprises:
- a first step in which closed intermediate containers are formed comprising a first part, constituting the open container to be obtained, and a second part for completing the intermediate container; and
- a second step in which said second part of the intermediate container is separated to obtain the required open container.

According to one embodiment of this process, the second part of the closed intermediate container, which is intended to be separated from the first part, constitutes a second open container, which can be identical to the first or be a lid for this latter.

According to another embodiment, the closed intermediate container comprises, in addition to the open first container and the open second container or lid, also an element for collecting off-cuts.

With the process just described, plastic buckets can be obtained at very competitive cost compared with the traditional injection moulding process. Moreover, it is possible to obtain containers with walls formed by also more than three layers of plastic material, this being not feasible by injection moulding.

However it should be noted that an extrusion and blow moulding process has already been used to produce buckets with lugs and the relative through hole for the hook-shaped ends of a rotatable metal handle, of the same type as those traditionally obtained by injection moulding, but with the aforelisted drawbacks.

A person not expert of the art, having read the aforegoing, might consider that the solution lies in seeking to also produce for buckets obtained by extrusion and blow moulding, not said lugs but instead the said circular dead holes of radial axis provided with an undercut, into which the relative mating end of the bucket handle (preferably of plastic) is to be inserted. It is however the widespread opinion of the experts of this art that extrusion and blow moulding cannot be used to produce dead holes with an undercut in the walls of containers themselves obtained by extrusion and blow moulding. Consequently these methods are discarded at the outset if proposed for such a solution, as in effect has been the experience of the inventors of the present patent application.

An object of the present invention is therefore to provide a process for easily and economically forming coupling means on the walls of plastic containers obtained by an extrusion and blow moulding process, said coupling means being arranged to cooperate with counter-means which enable miscellaneous articles to the applied to the container, such as a rotatable or non-rotatable handle, or a handgrip or accessories; or which enable a lid to be applied to and/or locked in position on the container.

Another object is to provide a mould for use in extrusion and blow moulding machines which enables containers to be obtained presenting said coupling means on their walls.

By operating against the opinion of the experts of the art, the inventors of the present invention at their own expense have carried out tests which (to the surprise of the experts of the art) have demonstrated that, with regard to the considered impossibility of forming holes with an undercut in the walls of a container obtained by extrusion and blow moulding, they were merely up against classical technical prejudice, which was as rooted as it was false. In this respect, by using the aforedescribed process of M12006A000266, and providing in the blow mould a radial peg facing inwards and presenting on its free end an enlarged head, such as to form in the wall of the resultant bucket a relative dead hole provided with an undercut, the shape of which reproduces that of said headed peg (which, inter alia, will have substantially the same shape as the end of the handle provided for the bucket), it was found that this peg can be removed from said dead hole without problem, when the mould is opened. The explanation is that when the mould is opened (done as quickly as possible after blow moulding, to obtain the highest possible achievable production), the plastic material of the container has a temperature which enables it to deform elastically with a certain ease, to hence enable the peg to be extracted without the bucket (and in particular that part thereof in which said dead hole with undercut is provided), and more generally the obtained container, becoming damaged or remaining permanently deformed.

Hence the aforesaid first object is achieved by a process in accordance with the present invention, of the extrusion and blow moulding type, characterised in that during the blow moulding step a mould is used presenting internally, in each position corresponding to that in which said coupling means are required to be provided on the container, a peg with an enlarged head, extending perpendicularly to the mould inner wall, which in the container enables a dead hole with undercut to be obtained having a shape matching that of said peg, a peg of matching shape connected directly or indirectly to said articles or to the lid being forcibly insertable into the dead hole.

The aforesaid second object is attained by the mould of the present invention, characterised by internally presenting, in each position corresponding to that in which said coupling means are to be provided on the container, a peg with enlarged head, extending perpendicularly to the mould wall.

The invention will be more apparent from the ensuing description of one embodiment of a mould and of the relative process, given by way of example according to the invention. In this description reference is made to the accompanying drawings, in which:
Figure 1 is an axial section through part of a plastic container obtained by extrusion and blow moulding and shown still enclosed in the blow mould, said part being that in which said coupling means are provided;
Figure 2 shows that container part visible in Figure 1, after it has been extracted from the mould;
Figure 3 is a side view of one of the two ends of a rotatable handle applicable to the container provided with the coupling means visible in Figure 2;
Figure 4 is an axial vertical section through a bucket provided with a rotatable handle applied by the coupling means of Figure 2;
Figures 5 and 6 show how a plastic can and bottle can be provided with coupling means obtained by the process of the invention, in particular to enable means to be applied respectively to the can and bottle to prevent loss of the relative lid or stopper when removed;
Figure 7 shows an open cylindrical container obtained by extrusion and blow moulding, provided with a lid and with coupling means obtained in accordance with the process of the present invention, the coupling means enabling the lid to be fastened to the container by suitable bendable tabs provided with a peg for snap-fitting into the relative coupling means.

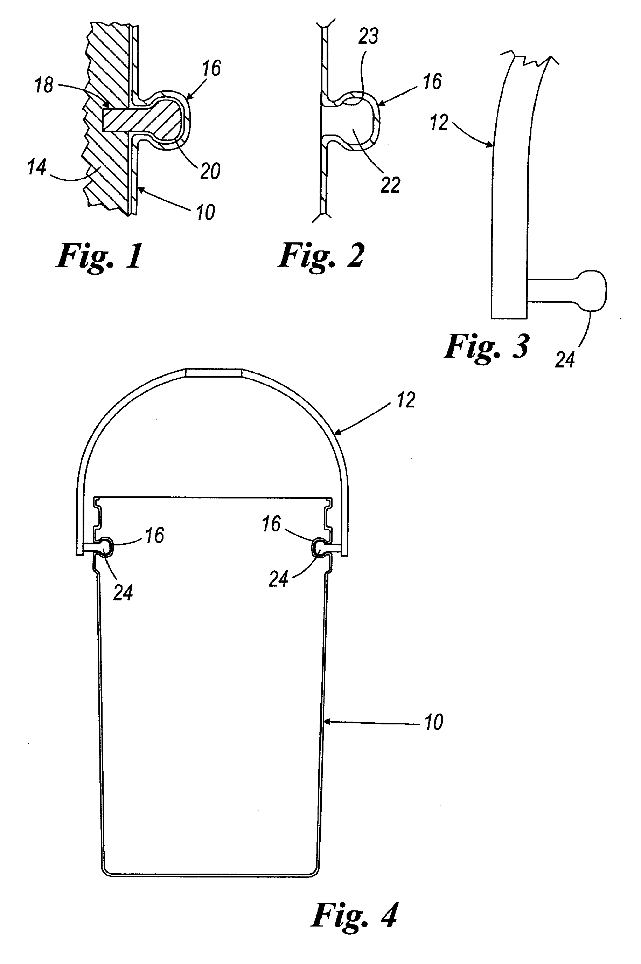

Having established that the container to be obtained is to be produced by an extrusion and blow moulding process, in order to produce open containers (such as the bucket 10 of Figure 4) the already described process of M12006A000266 can be conveniently used. A peg 18 with an enlarged head 20 is fixed into the utilized blow mould 14 (Figure 1), in an internal position corresponding to that in which said coupling means (indicated by 16 in the figures) are present on the container 10, such as to extend perpendicularly to the wall of the mould 14. To fix the peg 18 to the mould 14, this latter can be provided with a threaded hole into which to screw the partially threaded shank of the peg 18. Following the blow moulding step of the production process for the container 10, this latter assumes its final form as a result of the fact that the plastic material used (for example polyethylene, polypropylene or polycarbonate), which is in the fluid state, adheres completely to the walls of the mould 14 and hence also to the peg 18 (Figure 1). The result is that when the mould 14 is opened, to extract the produced piece 10 therefrom after the normal waiting times from the conclusion of the blow moulding step have passed, the wall of the piece 10 will comprise said coupling means 16 consisting essentially of a dead hole 22 provided with an undercut 23 (Figure 2). The shape of the hole 22 is evidently the same as said peg 18.

The coupling means 16 can cooperate with counter-means 24 which are merely a peg having in practice the same shape and same dimensions as the peg 18. These counter-means are provided for example at each of the two ends of a rotatable handle 12 for the bucket 10 (Figures 3 and 4). The handle 12 is conveniently made of plastic, because of which, having a certain elasticity and by virtue also of the elasticity of the plastic forming the bucket 10, the handle 12 can be applied to this latter by simply forcing each of its two end pegs 24 into the relative coupling means 16, to obtain the situation of Figure 4.

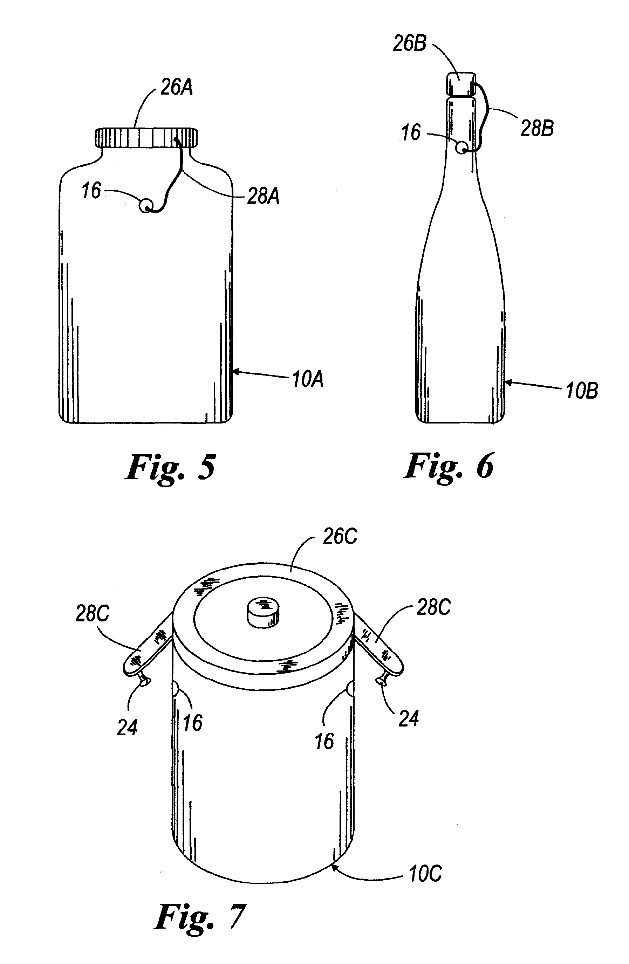

As already stated, the use of the coupling means 16 is not limited to allowing the application of a rotatable handle to a bucket or to another container (for example a can), but can have many other applications and more generally can be used to connect other articles to a vessel obtained by an extrusion and blow moulding process, and in particular to connect the stopper to the vessel (10A and 10B respectively) or to connect the lid to a vessel (for example the cap 26A of the can 10A of Figure 5 or the stopper 26B of the bottle 10B of Figure 6), by a flexible cord (28A and 28B respectively). As can be seen, one end of the cord 28A, 28B is connected in any manner to the cap 26A or to the stopper 26B, while the other end is connected to a peg of the same type as the peg 24 of Figure 3, which is forcibly insertable into the relative dead hole 22 of the coupling means 16 (Figure 2). When the cap 26A or stopper 26B is removed from the relative container 10A or 10B, there is no risk of losing it, it being connected to the container by the cord 28A or 28B.

Another application of the coupling means 16 enables a cap or stopper of a container to be locked in position. In particular, in the case of the cylindrical container 10C of Figure 7, which is provided with a lid 26C, this latter presents two bendable diametrically opposing peripheral tabs 28C, to the free end of which a relative peg of the same type as the peg 24 of Figure 3 is fixed. This latter can be forcibly inserted into corresponding coupling means 16 provided, by the aforedescribed process, in corresponding positions in the lateral surface of the container 10C, to lock the lid 26C onto the container 10C. The lid can be released by the reverse operation.

The tabs 28C can also be in a number other than that shown in Figure 7 (for example three or four), with one or more of them also acting as a hinge for the lid. The said tabs can also be used to lock lids in position for vessels of different shape than that of Figure 7 (for example cylindrical but with an elliptical base, or of prismatic shape with any polygon as its base).

Another application of said coupling means consists of enabling a plastic nameplate or label already carrying or which can carry reproductions (for example by silk-screen printing) of miscellaneous drawings and/or writings (for example indicating the contained product, or dangerous situations due to the contained product, or with the name of the producer and/or data and/or characteristics relative to the contained product), and also to enable the container or lid - if obtained in the manner described in M12006A000266 - to be fitted with handles of various materials (for example plastic or metal), provided they comprise at least one peg of the same type as the peg 24 of Figure 3, insertable into a corresponding dead hole 22 provided in a corresponding position in the vessel and/or in its lid.

A further use is to connect a transparent plastic sachet or small container containing for example gifts, coupons or spare parts to a vessel by means of a cord similar to the cord 28A and 28B of Figures 5 and 6.

The aforegiven examples evidently do not represent all possible uses of the coupling means obtainable by the process and mould of the present invention, their use being limited only by feasibility and fantasy. More generally they can be usefully used in all those cases in which any article is to be applied to a container and possibly to its lid (if also obtained by extrusion and blow moulding).

It is a also apparent that the force required to insert the peg 24, connected to the article to be applied to the container or lid, into the relative undercut hole 22 depends on the dimensions of the head of the peg 24. In other words, by varying these dimensions, i.e. by varying the interference between the head of the peg 24 and the mouth of the hole 22, not only the force required to insert the peg 24 into position can be preset, but also the force required for its extraction (should this be intended).

## Claims

1. A process for forming coupling means (16) on the walls of plastic containers (10; 10A; 10B; 10C) obtained using an extrusion and blow moulding process, the coupling means (16) serving either to apply miscellaneous articles (12; 26A, 28A, 26B, 28B) to the container (10; 10A; 10B; 10C) or to connect a lid (26C, 28C) to the container (10C) and/or to lock it thereto, by means of counter-means (24) which can be made to mate with the coupling means (16) by forcing, **characterised in that** during the blow moulding step a mould (14) is used presenting internally, in each position corresponding to that in which said coupling means (16) are to be provided on the container (10; 10A; 10B; 10C), a peg (18) with an enlarged head (20), extending perpendicularly to the internal wall of the mould (14), which enables a dead hole (22) with an undercut (23), of shape matching that of said peg (18), to be obtained in the container (10; 10A; 10B; 10C), there being forcibly insertable into the dead hole (22) a peg (24) of matching shape connected directly or indirectly to said articles (12; 26A; 28A, 26B, 28B) or to the lid (26C 28C).

2. A mould (14) for extrusion and blow moulding machines for producing plastic containers (10; 10A; 10B; 10C) provided with coupling means (16) for applying miscellaneous articles (12; 26A, 28A; 26B, 28B) to the container (10; 10A; 10B; 10C) or for connecting a lid (26C, 28C) to the container (10C) and/or locking it thereon, **characterised by** presenting internally, in each position corresponding to that in which said coupling means (16) are to be provided, a peg (18) with an enlarged head, extending perpendicularly to the mould wall.
